# EUROPÄISCHE PATENTSCHRIFT

(11) **EP 0 351 528 B1**
(45) Veröffentlichungstag und Bekanntmachung des Hinweises auf die Patenterteilung: **01.09.1993**
(21) Anmeldenummer: 89109995.4
(22) Anmeldetag: 02.06.1989
(51) Int. Cl.: B60S 1/32

(54) **Wischvorrichtung für gekrümmte Scheiben von Kraftfahrzeugen**
Wiping arrangement for curved motor vehicle windows
Installation d'essuyage pour vitres courbées de véhicules automobiles

(30) Priorität: 20.07.1988 DE 3824489
(43) Veröffentlichungstag der Anmeldung: 24.01.1990
(73) Patentinhaber: ROBERT BOSCH GMBH, 70442 Stuttgart (DE)
(72) Erfinder: Kühbauch, Gerd, Dipl.-Ing (FH), D-7582 Bühlertal (DE)

(56) Entgegenhaltungen:
- DE-A- 2 514 060
- DE-B- 1 044 644
- US-A- 3 383 731
- US-A- 3 405 421
- PATENT ABSTRACTS OF JAPAN vol. 11, no. 333 (M-637)(2780) 30. Oktober 1987 & JP-A-62 116 341 ( NIPPON SOKEN INC ) 27. Mai 1987

## Beschreibung

### Die Erfindung betrifft eine Wischvorrichtung für gekrümmte Scheiben von Kraftfahrzeugen.

### Stand der Technik

Es ist schon eine Pendelwischvorrichtung bekannt (US-PS 25 05 078), bei der eine durch das Wischblatt gelegte Mittelebene beim entlastetem, auf der Scheibe aufgesetzten Wischblatt senkrecht auf der Scheibe steht. Dieses Wischblatt vermag eine ebene Scheibe optimal zu reinigen, weil über das von ihm bestrichene Wischfeld - sowohl beim Hin- als auch beim Rückweg - die Verhältnisse zwischen Wischblatt und Scheibe gleich bleiben, also keine Normalenabweichungen auftreten. Bei gekrümmten Scheiben dagegen ändert sich die Neigung dieser Mittelebene zur Scheibenoberfläche stetig über das gesamte Wischfeld gesehen. Diese Änderung ist bei pendelnd angetriebenen Wischern, die auf der Scheibe ein ringsegmentähnliches Wischfeld bestreichen, auch in Längsrichtung des Wischblatts gesehen unterschiedlich. Die Stellung der Ebene zum von ihr durchdrungenen Scheibenbereich ist am Außenbogen des Wischfeldes anders als an dessen Innenbogen und wiederum anders als an einem Mittelbogen, den das Gelenk zwischen Wischblatt und Wischerarm in Betrieb beschreibt. Die bei der ebenen Scheibe beschriebene optimale Ausrichtung der Fläche zur Scheibe kann bei gekrümmten Scheiben im Betrieb des Wischblatts nur punktuell und stetig in Längsrichtung des Wischblatts wandernd erreicht werden. Dabei sind die von der Idealen vorhandenen Abweichungen in den stärker gekrümmten Seitenbereichen der Scheibe größer als in den ebeneren Scheiben-Mittelbereichen. Die Flexibilität des Wischgummis kann dabei diese Abweichungen nur teilweise ausgleichen.

Bei den bekannten Pendelwischvorrichtungen stellt man deshalb die Pendelachse zur Scheibenkontur so ein, daß etwa in der Mittelstellung des Wischblatts die dem Idealzustand am nächsten kommende Stellung der Mittelebene zu dem von ihr durchdrungenen Scheibenbereich erreicht wird. Je stärker die Scheibenkrümmung über das gesamte Wischfeld gesehen, desto größer ist der von der Idealstellung der Ebene abweichende Fehler, der als Normalenabweichung bezeichnet und in Winkelgraden ausgedrückt wird. Dabei ist aus dem oben erläuterten Grund die Normalenabweichung am Innenkreis, am Mittelkreis und am Außenkreis stets unterschiedlich groß. Aus der obigen Erläuterung ergibt sich weiter, daß mit der Normalenabweichung der Winkel bezeichnet wird, um den eine in der beschriebenen Ebene liegenden Linie und von einer senkrechten auf den von der Linie durchdrungenen Scheibenbereich abweicht. Eine weitere Schwierigkeit ergibt sich auch dadurch, daß die beschriebenen Verhältnisse beim Hinweg des Wischblatts von denen abweichen, die sich beim Wischblatt-Rückweg ergeben. Besonders schwierig zu beherrschen sind die Bedingungen, die bei sogenannten Einhebel-Wischanlagen auftreten, weil das Wischblatt dort beide stark gekrümmten Seitenbereiche der Scheibe bearbeiten muß.

Die Erfindung aber geht aus von einer Wischvorrichtung nach der Gattung des Hauptanspruchs. Es ist schon eine solche Wischvorrichtung bekannt (DE-OS 36 38 159), bei der Mittel zum Umformen der Pendelbewegung des Wischerarms in eine Schwenkbewegung des Wischblatts anspruchsvoll und somit auch höchsten Anforderungen genügend ausgebildet sind.

### Vorteile der Erfindung

Die erfindungsgemaße Wischvorrichtung mit den Merkmalen des Hauptanspruchs hat demgegenüber den Vorteil, daß sich eine einfach aufgebaute, kostengünstige Wischvorrichtung ergibt.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

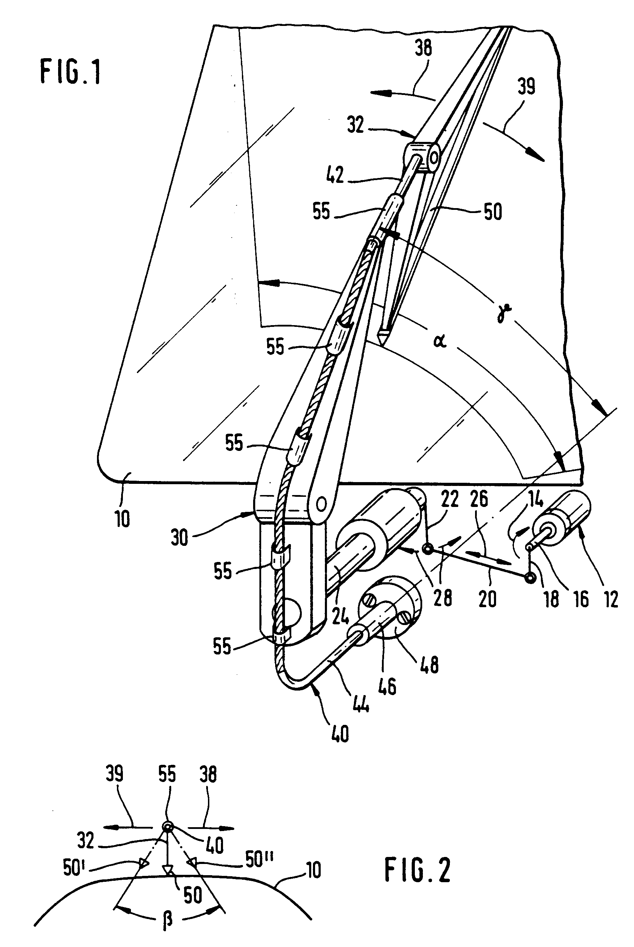

Ein Ausführungsbeispiel der Erfindung ist in der Zeichnung darge stellt und in der nachfolgenden Beschreibung näher erläutert. Es zeigen Figur 1 eine isometrisch gezeichnete Prinzipdarstellung einer erfindungsgemäß ausgebildeten Wischvorrichtung und Figur 2 eine Prinzipskizze eines auf einer gekrümmten Windschutzscheibe liegenden Wischblatts, von oben gesehen.

### Beschreibung des Ausführungsbeispiels

Eine in Figur 1 dargestellte Wischvorrichtung zum Reinigen einer Windschutzscheibe 10 eines nicht näher dargestellten Kraftfahrzeuges weist ein Antriebsaggregat 12 auf, mit dessen in Richtung eines Pfeiles 14 umlaufenden Abtriebswelle 16, eine Kurbel 18 fest verbunden ist. An dem freien Ende der Kurbel ist ein Ende einer Schubstange 20 angelenkt, deren anderes Ende gelenkig an einer Schwinge 22 verbunden ist, welche fest mit einer gestellfest gelagerten Wischerwelle 24 gehalten ist. Wenn die Kurbel 18 in Richtung des Pfeiles 14 umlaufend angetrieben wird, überträgt die in Richtung des Doppelpfeiles 26 angetriebene Schubstange 20 diese Bewegung auf die Schwinge 22, welche in Richtung der beiden Pfeile 28 pendelt oder schwingt. Diese Bewegung führt auch die Wischer- oder Pendelwelle 24 aus, an deren, von der Schwinge 22 abgewandten Ende, ein Wischerarm 30 befestigt ist. Der Wischerarm 30 beinhaltet ein auf der zu wischenden Scheibe 10 aufliegendes Wischblatt 32, das somit ebenfalls die Pendelbewegung gemäß der Pfeile 28 ausführt. Diese Pendelbewegung ist durch die Pfeile 38, 39 angedeutet.

Neben diesem an sich bekannten Pendelantrieb des Wischerarm 30 wird dem Wischblatt 32 aber auch eine Schwenkbewegung zugeführt, die von der Pendelbewegung des Wischerarm 30 abgeleitet ist. Dazu weist die erfindungsgemäße Wischvorrichtung ein langgestrecktes, einendig gestellfest gehaltenes, biegsames Bauelement 40 auf, dessen eines Ende 42 mit dem Wischblatt 32 verbunden ist. Das andere, gestellfest gehaltene Ende 44 des Bauelements 40 ist in einem Rohrflansch 46 verankert, der in einen Scheibenflansch 48 übergeht. Der Scheibenflansch 48 ist fest mit einem nicht näher dargestellten Karosserieteil des Kraftfahrzeuges verbunden. Vom Rohrflansch 46 aus erstreckt sich das als flexible, torsionssteife Stange ausgebildete Bauelement 40 durch Führungen 55 des Wischhebels 30 bis zum Wischblatt 32, mit dem es direkt - über das Ende 42 - oder beispielsweise über eine Zwischenwelle verbunden ist. Wie insbesondere Figur 1 zeigt, schließt das gestellfest gehaltene Ende 44 des Bauelements 40 mit der Achse des mit dem Wischblatt 32 verbundenen Endes 42 des Bauelements 40 einen Winkel γ ein, der kleiner als 180 ° ist. Weiter ist die Anordnung des gestellfest gehaltenen Endes 44 des Bauelements 40 so getroffen, daß sie mit der Achse der Pendelwelle 24 einen Winkel von weniger als 90 Grad einschließt.

Wenn nun die so beschriebene Wischvorrichtung arbeitet und der Wischerarm 30 um die Längsachse der Pendelwelle 24 über einen Wischwinkel pendelt, der in Figur 1 mit α bezeichnet ist, ergibt sich zwischen dem gestellfesten Bauelementenende 44 und dem mit dem Wischblatt 32 verbundenen Bauelementenende 42 eine Relativbewegung, welcher in Figur 2 mit dem Winkel β bezeichnet ist. Diese Pendelbewegung wird erreicht, während der Wischerarm 30 zusammen mit dem Wischblatt 32 den Pendelwinkel α auf der Windschutzscheibe 10 ausführt. Dabei ist die Schwenkbewegung β in bezug auf die Pendelbewegung α so abgestimmt, daß bei einer Pendelbewegung in Richtung des Pfeiles 38 das Wischblatt 32 gegenläufig geschwenkt wird, so daß sich seine Wischlippe 50 in einer Position bewegt, die in Figur 2 mit 50′ bezeichnet ist. Umgekehrt schwenkt natürlich die Wischlippe 50 in eine in Figur 2 mit 50˝ bezeichnete Position, wenn sich der Wischerarm 30 in Richtung des Pfeiles 39 bewegt.

Das Wischblatt 32 ist also um eine Achse schwenkbar, die sich mit Abstand von der Oberfläche der zu wischenden Scheibe 10 befindet und die sich im wesentlichen parallel zu dieser erstreckt. Diese Achse ist beim Ausführungsbeispiel zur Achse der Pendelwelle 24 ausgerichtet, was aber nicht zwingend vorgeschrieben ist.

Auf diese Weise ergibt sich eine Wischvorrichtung, deren Wischblatt stetig der sich ändernden Scheibenkrümmung angepaßt wird. Die besonderen Vorzüge der erfindungsgemäßen Wischvorrichtung sind in einem geräuschlosen Ablauf dieser Schwenkbewegung, einer hohen Funktionssicherheit, guten Notlaufeigenschaften und in ihrem montagefreundlichen Aufbau zu sehen. Besonders geeignet dürfte die erfindungsgemäße Wischvorrichtung dort sein, wo bei Heckscheiben und Scheinwerferabdeckscheiben die Forderung aufgestellt wird, daß neben der Pendelbewegung des Wischblatts dieses auch eine oben beschriebene Schwenkbewegung ausführen soll. Weiter ist es denkbar, die Schwenkbewegung des Wischblatts zur Unterstützung bzw. Auslösung der Kippbewegung der Wischlippe zu benutzen, die in den jeweiligen Pendel-Umkehrstellungen des Wischblatts erfolgt, so daß die Wischlippe über die Scheibe 10 geschleppt wird.

## Patentansprüche

1. Wischvorrichtung für gekrümmte Scheiben von Kraftfahrzeugen, mit einem pendelnd angetriebenen Wischerarm (30) und einem an dessen freien Ende angelenkten Wischblatt (32), das durch eine von der Pendelbewegung abgeleitete Bewegung um eine Achse schwenkbar ist, die sich mit Abstand von der zu wischenden Scheibenoberfläche befindet und die sich im wesentlichen parallel zu dieser erstreckend wenigstens annähernd zur Pendelachse ausgerichtet ist, dadurch gekennzeichnet, daß die Mittel zum Umformen der Pendelbewegung (α) des Wischerarms (30) in eine Schwenkbewegung (β) des Wischblatts (32) durch ein langgestrecktes, einendig gestellfest gehaltenes, biegsames und torsionssteifes Bauelement (40) gebildet sind, dessen anderes Ende (42) mit einer am Wischerarm (30) geführten, mit dem Wischblatt (32) verbundenen Schwenkwelle (42) verbunden ist, deren Schwenkachse eine Fortsetzung der Längsachse des mit ihr verbundenen Bauelementenendes (42) bildet und die Achse des gestellfesten Bauelementenendes (44) mit der Achse der Schwenkwelle (42) einen Winkel (γ) einschließt, der kleiner als 180 ° ist.

2. Wischvorrichtung nach Anspruch 1, dadurch gekennzeichnet, daß das gestellfeste Ende (44) des Bauelements (40) mit der Achse der Pendelwelle (24) einen Winkel von weniger als 90 Grad einschließt.

3. Wischvorrichtung nach einem der Ansprüche 1 oder 2, dadurch gekennzeichnet, daß die Schwenkwelle (42) einstückig mit dem Bauelement (40) verbunden ist.

4. Wischvorrichtung nach einem der Ansprüche 1 bis 3, dadurch gekennzeichnet, daß der Wischerarm (30) eine Führung (55) für das Bauelement (40) aufweist.

## Claims

1. Wiping device for curved screens of motor vehicles, having a pendulously driven wiper arm (30) and a wiper blade (32) hinge-connected to its free end, which wiper blade is pivotable, by a motion derived from the pendulum motion, about an axis which is located at a distance from the screen surface to be wiped and which, extending essentially parallel to this, is aligned at least approximately to the pendulum axis, characterised in that the means for transforming the pendulum motion (α) of the wiper arm (30) into a swivel motion (β) of the wiper blade (32) are formed by an elongated, flexible and torsion-resistant structural element (40), which at one end is held fixed to the chassis and the other end (42) of which is connected to a swivel shaft (42), guided on the wiper arm (30) and connected to the wiper blade (32), the swivel axis of the said swivel shaft forming a continuation of the longitudinal axis of the structural element end (42) connected thereto, and in that the axis of the chassis-fixed structural element end (44) forms an angle (γ) with the axis of the swivel shaft (42) which is less than 180°.

2. Wiping device according to Claim 1, characterised in that the chassis-fixed end (44) of the structural element (40) forms an angle of less than 90 degrees with the axis of the pendulum shaft (24).

3. Wiping device according to one of Claims 1 or 2, characterised in that the swivel shaft (42) is connected in one piece to the structural element (40).

4. Wiping device according to one of Claims 1 to 3, characterised in that the wiper arm (30) exhibits a guide (55) for the structural element (40).

## Revendications

1. Dispositif d'essuyage pour vitres courbées de véhicules automobiles, comprenant un bras entraîné pendulaire (30) à l'extrémité libre duquel est articulé un balai d'essuie-glace (32) pouvant, pendant le mouvement de balayage, pivoter sur un axe situé à une certaine distance de la surface vitrée à balayer et orienté sensiblement en direction de l'axe d'oscillation, caractérisé en ce que les moyens suivants à obtenir, à partir du mouvement pendulaire du bras (30), d'amplitude (α), un mouvement d'inclinaison du balai d'essuie-glace (32), d'amplitude (β), sont constitués par un élément longitudinal (40), flexible mais doué de rigidité torsionnelle, fixé au châssis par une extrémité tandis que l'autre extrémité est reliée à un axe oscillant (42) relié au balai d'essuie-glace (32), guidé par le bras d'essuie-glace (30), cet axe oscillant forme une prolongation de l'axe longitudinal de l'extrémité de l'élément (42) relié à lui et l'axe de l'extrémité de l'élément (44), fixé au châssis, fait avec l'axe oscillant (42) un angle (γ) inférieur à 180°.

2. Dispositif d'essuyage selon la revendication 1, caractérisé en ce que l'extrémité (44) fixée au châssis de l'élément (40) forme avec l'axe de l'arbre d'oscillation (24) un angle inférieur à 90°.

3. Dispositif d'essuyage selon une des revendications 1 ou 2, caractérisé en ce que l'axe oscillant (42) est relié en une pièce à l'élément (40).

4. Dispositif d'essuyage selon une des revendications 1 à 3, caractérisé en ce que le bras d'essuie-glace (30) comporte un guide (55) pour l'élément (40).
